# EUROPÄISCHE PATENTANMELDUNG

(11) **EP 4 717 081 A1**
(43) Veröffentlichungstag der Anmeldung: **01.04.2026**
(21) Anmeldenummer: 25204528.1
(22) Anmeldetag: 25.09.2025
(51) Int. Cl.: A01K 1/015, A01K 1/02

(54) **SCHWEINESTALL**

(30) Priorität: 26.09.2024 DE 202024105555 U
(71) Anmelder: A. G. Stalltechnik & Genetik GmbH, 26892 Heede / Ems (DE)
(72) Erfinder: Ganseforth, Heinrich, 26892 Heede/ Ems (DE)
(74) Vertreter: Jabbusch, Matthias

(57) **Zusammenfassung**

Bei einem wenigstens eine Buchteneinheit aufweisenden Schweinestall weisen die Buchten jeweils wenigstens einen Aufenthaltsbereich (5, 6, 7, 8) für Muttersauen und Ferkel, wenigstens ein Ferkelnest (9, 10) sowie wenigstens einen auf Spaltenboden eingerichteten Futter- und Toilettenbereich (11, 12, 13, 14) auf. Dabei weist jeder Aufenthaltsbereich (5, 6, 7, 8) eine Fußbodenerwärmung auf, die eine im Fußboden zu wenigstens einem Heizkreis (15, 16) verlegte Rohrleitung (17, 18) hat. Außerdem weist jeder Aufenthaltsbereich (5, 6, 7, 8) eine Fußbodenkühlung auf, die eine im Fußboden zu wenigstens einem Kühlkreis (19, 20) verlegte Rohrleitung (21, 22) hat. Mit dem Heizkreis (15, 16) und dem Kühlkreis (19, 20) ist dann am Fußboden eines jeden Aufenthaltsbereichs (5, 6, 7, 8) wenigstens bereichsweise eine gemeinsame Wärmeaustauschfläche (23, 24) ausgebildet. Dabei laufen die Rohrleitung (17, 18) des Heizkreises (15, 16) und die Rohrleitung (21, 22) des Kühlkreises (19, 20) in den Bereichen einer gemeinsamen Wärmeaustauschfläche (23, 24) in einer alternierenden Anordnung nebeneinander her.

## Beschreibung

Die Erfindung betrifft einen Schweinestall mit wenigstens einer Buchteneinheit, deren Buchten jeweils wenigstens einen Aufenthaltsbereich für Muttersauen und Ferkel, wenigstens ein Ferkelnest sowie wenigstens einen auf Spaltenboden eingerichteten Futter- und Toilettenbereich aufweisen.

Es ist bekannt, dass das Domestizieren des Wildschweins zum Hausschwein zu Lasten seiner Widerstandsfähigkeit gegen diverse Witterungseinflüsse gegangen ist. In der Folge benötigte man für Hausschweine Stallungen, welche die Tiere vor Witterungseinflüssen schützten. Im Zuge der Intensivierung der Nutztierhaltung wurden derartige Stallungen zu speziellen Schweineställen weiterentwickelt, mit denen sich die Effizienz bei der Fleischproduktion nochmals erheblich steigern ließ. Dabei wurde aus Effizienzgründen insbesondere auch auf den Einsatz großer Stalleinheiten mit hohen Besatzdichten gesetzt, wobei die erhöhte Ammoniakbildung und räumliche Beengtheit zu einer großen Stressbelastung und schließlich zu einem erhöhten Infektionsrisiko führen. Das hat schließlich dazu geführt, dass die Tiere in der intensiven Nutztierhaltung einem Leid ausgesetzt waren, was sich auch in der Qualität des Fleisches bemerkbar gemacht hat. Aufklärungsarbeit von Tier- und Umweltschützern, Gesundheitsexperten und Ernährungswissenschaftlern hat schließlich zu einem Umdenken in der Bevölkerung geführt, so dass immer größer werdende Bevölkerungsteile darauf achten, wie es den Tieren, dessen Fleisch sie essen, bis zu ihrer Schlachtung ergangen ist. Besonders hervorzuheben ist die "Initiative Tierwohl", die mit der Vergabe eines Gütesiegels an landwirtschaftliche Betriebe wirbt, welche sich der Einhaltung definierter Standards verpflichtet haben. Leider gehen sämtliche Bestrebungen zur Verbesserung der Haltebedingungen von Tieren mit steigenden Fleischkosten einher. Die Akzeptanzbereitschaft für solche Preissteigerungen ist jedoch oftmals auch kleiner als der Wunsch nach mehr Tierwohl.

Der Erfindung liegt deshalb die Aufgabe zugrunde, einen Schweinestall der eingangs genannten Gattung aufzuzeigen, mit dem die Mehrkosten für Schweinefleisch bei maßgeblich verbessertem Tierwohl in akzeptablen Grenzen gehalten werden können.

Diese Aufgabe ist erfindungsgemäß durch einen Schweinestall mit den Merkmalen des Schutzanspruches 1 gelöst. Vorteilhafte Weiterbildungen der Erfindung sind in den Unteransprüchen angegeben.

Der erfindungsgemäße Schweinestall zeichnet sich dadurch aus, dass jeder Aufenthaltsbereich eine Fußbodenerwärmung aufweist, die eine im Fußboden zu wenigstens einem Heizkreis verlegte Rohrleitung hat, dass jeder Aufenthaltsbereich eine Fußbodenkühlung aufweist, die eine im Fußboden zu wenigstens einem Kühlkreis verlegte Rohrleitung hat, und dass mit dem Heizkreis und dem Kühlkreis am Fußboden eines jeden Aufenthaltsbereichs wenigstens bereichsweise eine gemeinsame Wärmeaustauschfläche ausgebildet ist.

Der Kühlkreis ermöglicht innerhalb des Aufenthaltsbereiches die Schaffung eines gekühlten Liegebereiches, mit welchem sich das Wohlbefinden der Muttersauen signifikant steigern lässt. Zum Abferkeln hingegen sollte der Aufenthaltsbereich jedoch temporär erwärmt werden, um ein Auskühlen der Ferkel, unmittelbar nachdem sie abgesetzt wurden, zu verhindern. Bereits wenige Stunden nach der Geburt sollen die Ferkel den Aufenthaltsbereich wieder verlassen und das Ferkelnest aufsuchen, im welchen keine Erdrückungsgefahr durch die Muttersau besteht und eine kostengünstige Aufrechterhaltung der von den Ferkeln noch benötigten Nesttemperatur einfach zu ermöglichen ist. Wird der Wärmekreis wieder abgeschaltet oder heruntergeregelt, werden die Ferkel auf der Suche nach einem wärmeren Ort selbständig in das Ferkelnest wechseln. Die mit dem Heizkreis ausgebildete Wärmeaustauschfläche ist vorzugsweise größer ausgebildet als die mit dem Kühlkreis ausgebildete Wärmeaustauschfläche, andere Größenverhältnisse liegen jedoch im Rahmen der Erfindung. Die gemeinsame Wärmeaustauschfläche ist derjenige Bereich, in dem die vom Wärmekreis ausgebildete Wärmeaustauschfläche und die vom Kühlkreis ausgebildete Wärmeaustauschfläche einander überschneiden. Dieser Überschneidungsbereich weist vorzugsweise die volle Größe der mit dem Kühlkreis ausgebildeten Wärmeaustauschfläche auf und kann somit inmitten der mit dem Heizkreis ausgebildeten Wärmeaustauschfläche gelegen sein.

Nach einer ersten Weiterbildung der Erfindung laufen die Rohrleitung des Heizkreises und die Rohrleitung des Kühlkreises in den Bereichen einer gemeinsamen Wärmeaustauschfläche in einer alternierenden Anordnung nebeneinander her. Dazu können die Rohrleitungen sowohl Schnecken- als auch mäanderförmige Verläufe aufweisen. Es liegt jedoch am Rahmen der Erfindung, die Rohrleitung des Heizkreises und die Rohrleitung des Kühlkreises in unterschiedlichen Ebenen des Fußbodens zu verlegen.

Nach einer nächsten Weiterbildung der Erfindung sind die Rohrleitung des Heizkreises und die Rohrleitung des Kühlkreises über eine Wärmepumpe in einer Wärmerückgewinnungsanlage miteinander verschaltet. Ist die Rohrleitung des Heizkreises als Wasserleitung und die Rohrleitung des Kühlkreises als Soleleitung ausgebildet, besteht vorteilhaft die Möglichkeit, die zur Schaffung des gekühlten Liegebereiches über die Soleleitung abzuführende Wärme zur Erwärmung des Ferkelnestes zu nutzen, und im Abferkelungszeitraum besteht vorteilhaft die Möglichkeit, die im Aufenthaltsbereich für die Erhöhung der Fußbodentemperatur über die Wasserleitung zuzuführende Wärme aus niedrigenergetischen Abwärmeprozessen, beispielsweise aus der Gülle der Schweine, zu nutzen.

Um die Mehrkosten für das verbesserte Tierwohl in akzeptablen Grenzen zu halten, ist die Wärmepumpe vorzugsweise an wenigstens eine auf dem Stalldach installierte Photovoltaik-Anlage angeschlossen. In Abhängigkeit der durch Deutschland laufenden Breitengerade weist das Stalldach des erfindungsgemäßen Schweinestalls vorzugsweise eine Dachneigung zwischen 30 und 40 Grad bei einem Azimutwinkel zwischen +45 bis -45 Grad auf. Demnach sollte die Ausrichtung der das Stalldach aufweisenden Dachflächen bereits Bestandteil der Bauplanung für den erfindungsgemäßen Schweinestall sein.

Eine besonders bedeutsame Verbesserung des Tierwohls ergibt sich daraus, dass die Fußbodenerwärmung wenigstens drei unabhängig voneinander ansteuerbare Heizkreise aufweist, wobei wenigstens einer der Heizkreise der im Aufenthaltsbereich für Muttersauen und Ferkel angeordnete Heizkreis ist und wenigstens zwei der Heizkreise im Ferkelnest angeordnet sind. Die verschiedenen Heizkreise ermöglichen dabei eine bedarfsorientierte Wärmezufuhr, welche die unterschiedlichen Bedürfnisse von Muttersauen und Ferkeln und auch die bei den Ferkeln über ihre Entwicklung hinweg stattfindenden Bedürfnisveränderungen berücksichtigt. Eine bedarfsweise Wärmezufuhr ist beispielsweise eine temporäre Erwärmung des Aufenthaltsbereiches für Muttersauen um den Geburtszeitraum herum. Durch Zuschaltung des zweiten im Ferkelnest angeordneten Wärmekreises kann die erwärmte Fläche des Ferkelnestes in ihrer Größe an das Alter und damit an den Platzbedarf der Ferkel angepasst werden. Die beiden Heizkreise des Ferkelnestes bieten jedoch auch die Möglichkeit der Ausbildung unterschiedlicher Temperaturbereiche. Um die Wärmeverluste aus dem Ferkelnest in die umliegenden Bereiche der das Ferkelnest aufweisenden Bucht zu minimieren, weist das Ferkelnest beispielsweise eine reduzierte Deckenhöhe und einen Lamellenvorhang auf. Die reduzierte Deckenhöhe ist beispielsweise mit einem Klappdeckel realisierbar der dem Personal des Schweinestallbetreibers Kontroll- und Zugriffsmöglichkeiten auf das Ferkelnest einräumt.

Für eine möglichst dynamische Anpassung des erfindungsgemäßen Schweinestalls an die Bedürfnisse der Ferkel wird vorgeschlagen, dass mit den zwei im Ferkelnest angeordneten Wärmekreisen wenigstens ein größerer Nestbereich und wenigstens ein kleinerer Nestbereich ausgebildet ist, wobei wenigstens über dem kleineren Nestbereich eine Infrarotlampe aufgehängt ist. In Verbindung mit der im Ferkelnest ausgebildeten Fußbodenerwärmung schafft die Infrarotlampe mit ihrer abwärts gerichteten Wärmestrahlung ein räumlich begrenztes Mikroklima, welches den Ferkeln für ihre gesunde Entwicklung vorteilhaft zuträglich ist.

Nach einer nächsten Weiterbildung der Erfindung hat jede Buchteinheit vier Buchten, die eine funktional doppelsymmetrische Anordnung zueinander aufweisen, wobei wenigstens eine der Symmetrieachsen auf der Mittellinie eines Verbindungsgangs liegt, über den Zugänge zu den Buchten miteinander verbunden sind, und die jeweils andere Symmetrieachse in einer Zwischenwandung verläuft, welche beidseitig des Verbindungsganges zwischen den Futter- und Toilettenbereichen jeweils zweier Buchten ausgebildet ist. Eine ihrer Funktion nach doppelsymmetrische Anordnung der Buchten zueinander erfordert im Rahmen dieser Erfindung nicht zwangsläufig auch eine ihrer Konstruktion nach doppelsymmetrische Anordnung. Die doppelsymmetrische Anordnung ermöglicht eine vorteilhaft kompaktbauende Buchteneinheit, mit der Baukosten und Betriebskosten reduziert werden können. Gleichzeitig ermöglicht die doppelsymmetrische Anordnung den Schweinen die für sie artspezifische Rottenbildung. Das Ausleben von artspezifischen Verhaltensweisen senkt den Stresspegel und stärkt das Immunsystem, so dass krankheitsbedingte Ausfälle ohne den Einsatz von Antibiotika nahezu vollständig vermieden sind. Die auf der Mittellinie des Verbindungsganges liegende Symmetrieachse ermöglicht eine gemeinsame Nutzung des Verbindungsganges von vier Muttersauen und deren Ferkeln und fördert genau damit die Rottenbildung und schließlich das natürliche Sozialverhalten der Schweine insgesamt. Die in der Zwischenwandung zwischen den Futter- und Toilettenbereichen verlaufende Symmetrieachse ermöglicht hingegen vorteilhaft die gemeinsame Nutzung der Zwischenwandung als Sichtschutz und Trägerstruktur für einen in jeder der Bucht angeordneten Futtertrog.

Nach einer besonders vorteilhaften Weiterbildung der Erfindung sind der Buchteneinheit ein Zentralgang sowie ein Außenauslauf zugeordnet, wobei der Zentralgang und der Außenauslauf über den Verbindungsgang miteinander verbunden sind. Der Zentralgang, sowie der Außenauslauf sind nicht Bestandteil der Buchteneinheit mit ihren vier Buchten in doppelsymmetrischer Anordnung. Vorzugsweise durchläuft der Zentralgang den erfindungsgemäßen Schweinestall auf einer Längsachse und dient somit der Verbindung beidseitig des Zentralganges angeordneter Buchteneinheiten untereinander. Der Außenauslauf ist der jeweiligen Buchteneinheit an der Längsseite des Schweinestalls vorgelagert und ist wenigstens teilweise überdacht, um den Schweinen auch an frischer Außenluft einen partiellen Schutz vor Sonnenlicht oder Niederschlag anzubieten.

Um den Schweinen einen eigenmächtigen Zugang in den Zentralgang hinein zu verwehren ist nach einer nächsten Weiterbildung der Erfindung vorgesehen, dass der Verbindungsgang wenigstens einer Innentür aufweist, die zwischen den Zugängen zu den Buchten einerseits und dem Zentralgang andererseits angeordnet ist. Die Innentür dient dem Personal des Schweinestallbetreibers maßgeblich als Zugang zu der Buchteneinheit sowie als Schleusentor zum Aus- und Einschleusen von Schweinen in die Buchteneinheit hinein bzw. aus dieser heraus.

Um das Tierwohl weiter zu verbessern, weist der Verbindungsgang nach einer anderen Ausgestaltung der Erfindung wenigstens eine Außentür auf, die zwischen den Zugängen zu den Buchten einerseits und dem Außenauslauf andererseits ausgebildet ist. In ihrer Grundstellung wird die Außentür geschlossen gehalten, so dass sie die Buchteneinheit und deren Buchten vor Auskühlung, Überhitzung und Zugluft schützt. Zum Öffnen der Außentür weist diese einen Türöffner auf, dessen Betätigung besonders einfach von den Schweinen erlernt werden kann. Ein nachfolgendes Verschließen der Tür erfolgt beispielsweise automatisch über ein sogenanntes Zeitverzögerungsrelais.

Der mit dem erfindungsgemäßen Schweinestall erreichbare wirtschaftliche Vorteil steigt mit der Anzahl der in einem Stallgebäude zusammengefassten Buchteneinheiten. Deshalb ist vorgesehen, dass die Buchteneinheit zusammen mit gleichen Buchteneinheiten in jeweils einfachsymmetrischer Anordnung beidseitig des die Symmetrieachse ausbildenden Zentralganges angeordnet sind. In Abhängigkeit von der Ausrichtung des Zentralganges zu den Himmelsrichtungen kann darüber nachgedacht werden, die Außenausläufe der auf einer Seite des Zentralganges gelegenen Buchteneinheiten unterschiedlich zu den Außenausläufen der auf der anderen Seite des Zentralganges gelegenen Buchteneinheiten auszubilden, beispielsweise um unterschiedliche Witterungseinflüsse oder Sonnenscheinstunden auszugleichen.

Nach einer besonders zweckmäßigen Weiterbildung der Erfindung ist unterhalb der Futter- und Toilettenbereiche ein Güllekeller mit einer Wärmerückgewinnung ausgebildet. Mit der Wärmerückgewinnung kann in den Exkrementen der Tiere enthaltende Wärme über eine Wärmeaustauschfläche an eine Frischluft abgegeben werden, die zur fortwährenden Belüftung des Schweinestalls benötigt wird. Eine andere Möglichkeit besteht darin, die in den Exkrementen der Tiere enthaltene Wärme für eine Fußbodenerwärmung zu nutzen. Mit der Wärmerückgewinnung sind insbesondere die Betriebskosten des erfindungsgemäßen Schweinestalls vorteilhaft reduziert.

Um das natürliche Verhalten bei der gemeinsamen Futteraufnahme von Muttersau und Ferkeln nicht zu behindern, ist nach einer anderen Weiterbildung der Erfindung vorgesehen, dass in jeder Bucht wenigstens ein Gemeinschaftsfuttertrog angeordnet ist, der einen im Futter- und Toilettenbereich angeordneten Trogabschnitt und einen im Ferkelnest angeordneten Trogabschnitt aufweist. Der Gemeinschaftsfuttertrog ist somit ein Bindeglied zwischen dem Ferkelnest und dem Futter- und Toilettenbereich, so dass eine Entwöhnung von der Futteraufnahme aus dem Ferkelnest heraus allmählich, natürlich und somit für die Tiere nahezu stressfrei erfolgen kann.

Um den stetig größer werdenden Platzbedarf der am Gemeinschaftsfuttertrog miteinander konkurrierenden Ferkel gerecht zu werden, ist nach einer besonders zweckmäßigen Weiterbildung der Erfindung vorgesehen, dass in jedem Futter- und Toilettenbereich wenigstens ein klappbeweglich gehaltenes Funktionsgestänge angeordnet ist, mit welchem in heruntergeklappter Stellung eine Ablegehilfe für Muttersauen und in hochgeklappter Stellung ein Futtertrog für Ferkel ausgebildet ist. Als Ablegehilfe verhindert das Funktionsgestänge vorteilhaft das Verunglücken noch sehr junger Ferkel unter der Muttersau, wenn diese sich an der Stallwandung ablegt. Als Futtertrog ermöglicht das Funktionsgestänge eine Vergrößerung des größeren Ferkeln, insbesondere Absetzferkeln, für die Nahrungsaufnahme zur Verfügung stehenden Raumes.

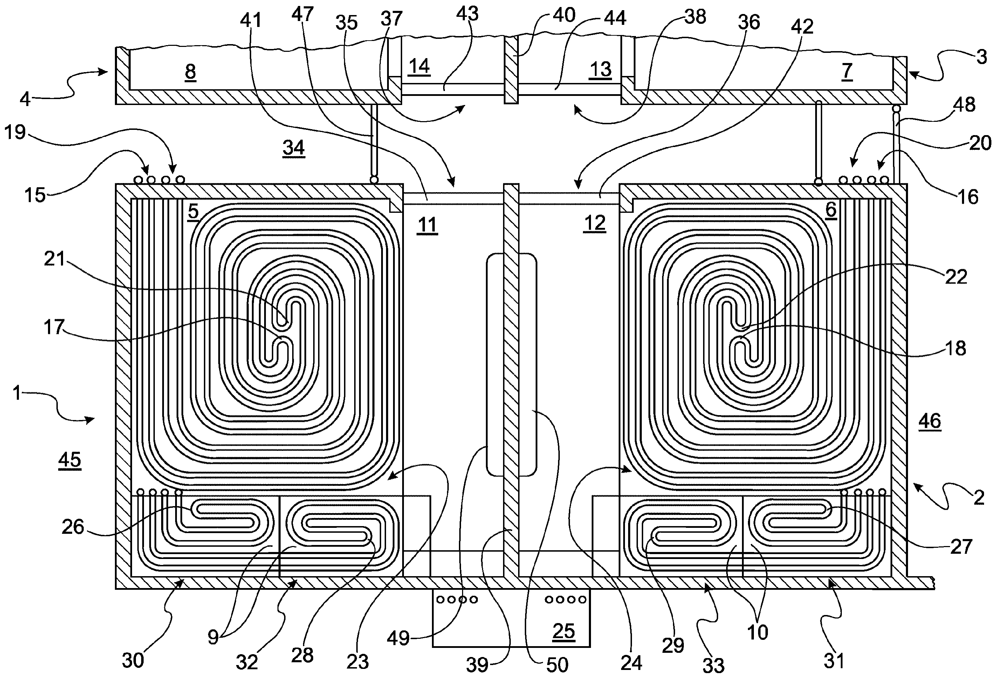

Ein Ausführungsbeispiel der Erfindung, aus dem sich weitere erfinderische Merkmale ergeben, ist in der Zeichnung dargestellt.

Die einzige Figur zeigt eine schematische Raumaufteilung eines erfindungsgemäßen Schweinestalls in einer teilgeschnittenen Draufsicht. Der dargestellte Teilabschnitt lässt erkennen, dass der Schweinestall mehrere Buchteneinheiten aufweist, deren jeweils vier Buchten 1, 2, 3, 4 jeweils einen Aufenthaltsbereich 5, 6, 7, 8 für Muttersauen und Ferkel, jeweils ein Ferkelnest 9, 10 sowie jeweils einen auf Spaltboden eingerichteten Futter- und Toilettenbereich 11, 12, 13, 14 aufweisen. Die Aufenthaltsbereiche 5, 6, 7, 8 weisen jeweils eine Fußbodenerwärmung auf, die eine im Fußboden zu einem Heizkreis 15 bzw. 16 verlegte Rohrleitung 17 bzw. 18 hat. Außerdem weist jeder Aufenthaltsbereich 5, 6, 7, 8 eine Fußbodenkühlung auf, die eine im Fußboden zu einem Kühlkreis 19 bzw. 20 verlegte Rohrleitung 21 bzw. 22 hat. Mit dem Heizkreis 15, 16 und dem Kühlkreis 19, 20 ist am Fußboden eines jeden Aufenthaltsbereiches 5, 6, 7, 8 eine gemeinsame Wärmeaustauschfläche 23 bzw. 24 ausgebildet, wobei die Rohrleitung 17 bzw. 18 des Heizkreises 15 bzw. 16 und die Rohrleitung 21 bzw. 22 des Kühlkreises 19 bzw. 20 in den Bereichen einer gemeinsamen Wärmeaustauschfläche 23 bzw. 24 in einer alternierenden Anordnung nebeneinander herlaufen. Die Rohrleitung 17 bzw. 18 des Heizkreises 15 bzw. 16 und die Rohrleitung 21 bzw. 22 des Kühlkreises 19 bzw. 20 sind über eine Wärmepumpe in einer Wärmerückgewinnungsanlage 25 miteinander verschaltet. Jede in einem der Aufenthaltsbereiche 5, 6, 7, 8 ausgebildete Fußbodenerwärmung weist drei unabhängig voneinander ansteuerbare Heizkreise 15, 26, 28 bzw. 16, 27, 29 auf, wobei einer dieser Heizkreise, der im jeweiligen Aufenthaltsbereich 5, 6, 7, 8 für Muttersauen und Ferkel angeordnete Heizkreis 15 bzw. 16 ist und zwei dieser Heizkreise im jeweils zugehörigen Ferkelnest 9, 10 angeordnet sind. Mit den zwei im Ferkelnest 9 bzw. 10 angeordneten Heizkreisen 26, 28 bzw. 27, 29 ist ein größerer Nestbereich 30 bzw. 31 und ein kleinerer Nestbereich 32 bzw. 33 ausgebildet, wobei über den kleineren Nestbereich 32 bzw. 33 eine nicht dargestellte Infrarotlampe aufgehängt ist. Die Figur gibt außerdem zu erkennen, dass die Buchten 1, 2, 3, 4 eine doppelt symmetrische Anordnung zueinander aufweisen, wobei eine der Symmetrieachsen auf der Mittellinie eines Verbindungganges 34 liegt, über den die Zugänge 35, 36, 37, 38 zu den Buchten 1, 2, 3, 4 miteinander verbunden sind. Die jeweils andere Symmetrieachse verläuft in einer Zwischenwandung 39, 40, welche beidseitig des Verbindungganges 34 zwischen den Futter- und Toilettenbereichen 11, 12 der Buchten 1 und 2 sowie den Futter- und Toilettenbereichen 13, 14 der Buchten 3 und 4 ausgebildet ist. An den Zugängen 35, 36, 37, 38 zu den Buchten 1, 2, 3, 4 sind im Spaltenboden höhenverstellbar gehaltene Ferkelsperren 41, 42, 43, 44 angeordnet. Den Buchteneinheiten ist ein gemeinsamer Zentralgang 45 sowie jeweils ein Außenauslauf 46 zugeordnet, wobei der Zentralgang 45 und der Außenauslauf 46 über den Verbindungsgang 34 miteinander verbunden sind. Der Verbindungsgang 34 weist eine Innentür 47 auf, die zwischen den Zugängen 35, 36, 37, 38 zu den Buchten 1, 2, 3, 4 einerseits und dem Zentralgang 45 andererseits angeordnet ist. Außerdem weist der Verbindungsgang 34 eine Außentür 48 auf, die zwischen den Zugängen 35, 36, 37, 38 zu den Buchten 1, 2, 3, 4 einerseits und dem Außenauslauf 46 andererseits ausgebildet ist. Weiterhin ist in jedem Futter- und Toilettenbereich 11, 12, 13, 14 ein an der Zwischenwandung 39 bzw. 40 klappbeweglich gehaltenes Funktionsgestänge 49 bzw. 50 angeordnet, mit welchem in der dargestellten heruntergeklappten Stellung eine Ablegehilfe für Muttersauen und in hochgeklappter Stellung ein Futtertrog für Ferkel ausgebildet ist.

## Patentansprüche

1. Schweinestall mit wenigstens einer Buchteneinheit, deren Buchten jeweils wenigstens einen Aufenthaltsbereich für Muttersauen und Ferkel, wenigstens ein Ferkelnest sowie wenigstens einen auf Spaltenboden eingerichteten Futter- und Toilettenbereich aufweisen,
**dadurch gekennzeichnet,**
**dass** jeder Aufenthaltsbereich (5, 6, 7, 8) eine Fußbodenerwärmung aufweist, die eine im Fußboden zu wenigstens einem Heizkreis (15, 16) verlegte Rohrleitung (17, 18) hat,
**dass** jeder Aufenthaltsbereich (5, 6, 7, 8) eine Fußbodenkühlung aufweist, die eine im Fußboden zu wenigstens einem Kühlkreis (19, 20) verlegte Rohrleitung (21, 22) hat und,
**dass** mit dem Heizkreis (15, 16) und dem Kühlkreis (19, 20) am Fußboden eines jeden Aufenthaltsbereichs (5, 6, 7, 8) wenigstens bereichsweise eine gemeinsame Wärmeaustauschfläche (23, 24) ausgebildet ist.

2. Schweinestall nach Anspruch 1, **dadurch gekennzeichnet, dass** die Rohrleitung (17, 18) des Heizkreises (15, 16) und die Rohrleitung (21, 22) des Kühlkreises (19, 20) in den Bereichen einer gemeinsamen Wärmeaustauschfläche (23, 24) in einer alternierenden Anordnung nebeneinander herlaufen.

3. Schweinestall nach Anspruch 1 oder 2, **dadurch gekennzeichnet, dass** die Rohrleitung (17, 18) des Heizkreises (15, 16) und die Rohrleitung (21, 22) des Kühlkreises (19, 20) über eine Wärmepumpe in einer Wärmerückgewinnungsanlage (25) miteinander verschaltet sind.

4. Schweinestall nach Anspruch 3, **dadurch gekennzeichnet, dass** die Wärmepumpe an wenigstens eine auf dem Stalldach installierte Photovoltaik-Anlage angeschlossen ist.

5. Schweinestall nach einem der Ansprüche 1 bis 4, **dadurch gekennzeichnet, dass** die Fußbodenerwärmung wenigstens drei unabhängig voneinander ansteuerbare Heizkreise (15, 26, 28 bzw. 16, 27, 29) aufweist, wobei wenigstens einer dieser Heizkreise der im Aufenthaltsbereich (5, 6, 7, 8) für Muttersauen und Ferkel angeordnete Heizkreis (15, 16) ist und wenigstens zwei der Heizkreise im Ferkelnest (9, 10) angeordnet sind.

6. Schweinestall nach Anspruch 5, **dadurch gekennzeichnet, dass** mit den zwei im Ferkelnest (9, 10) angeordneten Heizkreisen (26, 28 bzw. 27, 29) wenigstens ein größerer Nestbereich (30, 31) und wenigstens ein kleinerer Nestbereich (32, 33) ausgebildet ist, wobei wenigstens über dem kleinen Nestbereich (32, 33) eine Infrarotlampe aufgehängt ist.

7. Schweinestall nach einem der Ansprüche 1 bis 6, **dadurch gekennzeichnet, dass** jede Buchteneinheit vier Buchten (1, 2, 3, 4) hat, die eine funktional doppelsymmetrische Anordnung zueinander aufweisen, wobei wenigstens eine der Symmetrieachsen auf der Mittellinie eines Verbindungsganges (34) liegt, über den die Zugänge (35, 36, 37, 38) zu den Buchten (1, 2, 3, 4) miteinander verbunden sind, und dass die jeweils andere Symmetrieachse in einer Zwischenwandung (39, 40) verläuft, welche beidseitig des Verbindungsganges (34) zwischen den Futter- und Toilettenbereichen (11, 12 bzw. 13, 14) jeweils zweier Buchten (1, 2 bzw. 3, 4) ausgebildet ist.

8. Schweinestall nach einem Anspruch 7, **dadurch gekennzeichnet, dass** der Buchteneinheit ein Zentralgang (45) sowie ein Außenauslauf (46) zugeordnet sind, und dass der Zentralgang (45) und der Außenauslauf (46) über den Verbindungsgang (34) miteinander verbunden sind.

9. Schweinestall nach Anspruch 8, **dadurch gekennzeichnet, dass** der Verbindungsgang (34) wenigstens eine Innentür (47) aufweist, die zwischen den Zugängen (35, 36, 37, 38) zu den Buchten (1, 2, 3, 4) einerseits und dem Zentralgang (45) andererseits angeordnet ist.

10. Schweinestall nach Anspruch 8 oder 9, **dadurch gekennzeichnet, dass** der Verbindungsgang (34) wenigstens eine Außentür (48) aufweist, die zwischen den Zugängen (35, 36, 37, 38) zu den Buchten (1, 2, 3, 4) einerseits und dem Außenauslauf (46) andererseits ausgebildet ist.

11. Schweinestall nach einem der Ansprüche 8 bis 10, **dadurch gekennzeichnet, dass** die Buchteneinheit zusammen mit gleichen Buchteneinheiten in einfachsymmetrischer Anordnung beidseitig des die Symmetrieachse der Anordnung ausbildenden Zentralganges (45) angeordnet sind.

12. Schweinestall nach einem der Ansprüche 1 bis 11, **dadurch gekennzeichnet, dass** unterhalb der Futter- und Toilettenbereiche (11, 12, 13, 14) ein Güllekeller mit einer Wärmerückgewinnung ausgebildet ist.

13. Schweinestall nach einem der Ansprüche 1 bis 12, **dadurch gekennzeichnet, dass** in jeder Bucht (1, 2, 3, 4) wenigstens ein Gemeinschaftsfuttertrog angeordnet ist, der einen im Futter- und Toilettenbereich (11, 12, 13, 14) angeordneten Trogabschnitt und einen im Ferkelnest (9, 10) angeordneten Trogabschnitt aufweist.

14. Schweinestall nach einem der Ansprüche 7 bis 13, **dadurch gekennzeichnet, dass** in jedem Futter- und Toilettenbereich (11, 12, 13, 14) wenigstens ein klappbeweglich gehaltenes Funktionsgestänge (49, 50) angeordnet ist, mit welchem in heruntergeklappter Stellung eine Ablegehilfe für Muttersauen und in hochgeklappter Stellung ein Futtertrog für Ferkel ausgebildet ist.
